# EUROPÄISCHE PATENTSCHRIFT

(11) **EP 2 924 312 B1**
(45) Veröffentlichungstag und Bekanntmachung des Hinweises auf die Patenterteilung: **28.03.2018**
(21) Anmeldenummer: 15150874.4
(22) Anmeldetag: 13.01.2015
(51) Int. Cl.: F16D 48/02

(54) **Kupplungsanordnung, Kraftfahrzeugantriebsstrang und Kupplungssteuerverfahren**
Coupling assembly, motor vehicle power train and coupling control method
Système d'embrayage, chaîne cinématique de véhicule automobile et procédé de commande d'embrayage

(30) Priorität: 21.02.2014 DE 102014102250
(43) Veröffentlichungstag der Anmeldung: 30.09.2015
(73) Patentinhaber: GETRAG B.V. & Co. KG, 74199 Untergruppenbach (DE)
(72) Erfinder: Krauss, Christian, 50737 Köln (DE)
(74) Vertreter: Witte, Weller & Partner Patentanwälte mbB

(56) Entgegenhaltungen:
- EP-A1- 2 532 914
- EP-A2- 1 256 478
- WO-A1-2006/102948
- WO-A1-2013/110526
- WO-A2-2004/040158
- JP-A- 2001 206 092
- US-A1- 2009 298 648
- US-A1- 2011 021 301

## Beschreibung

Die vorliegende Erfindung betrifft eine Kupplungsanordnung für einen Kraftfahrzeugantriebsstrang, mit einer Reibkupplung und einer hydraulischen Aktuatoranordnung zum Betätigen der Reibkupplung, wobei die Aktuatoranordnung einen Hydraulikzylinder, eine Pumpe sowie einen Elektromotor aufweist, wobei der Elektromotor die Pumpe antreibt, wobei ein Druckanschluss der Pumpe über eine Druckleitung direkt mit dem Hydraulikzylinder verbunden ist, wobei der von der Pumpe in der Druckleitung bereitgestellte Druck durch Regeln der Drehzahl des Elektromotors einstellbar ist, wobei der Druckanschluss über einen Hydraulikzweig mit einem Niederdruckbereich verbunden ist und wobei in dem Hydraulikzweig eine den Durchfluss begrenzende Einrichtung angeordnet ist.

Ferner betrifft die vorliegende Erfindung einen Antriebsstrang für ein Kraftfahrzeug mit einer solchen Kupplungsanordnung sowie ein Verfahren zum Ansteuern einer solchen Kupplungsanordnung.

In Kraftfahrzeugantriebssträngen werden Kupplungsanordnungen der oben bezeichneten Art häufig als Anfahr- und Trennkupplungen verwendet. Dies kann sich sowohl auf automatisierte Schaltgetriebe mit einer einzelnen Reibkupplung als auch auf Doppelkupplungsgetriebe mit einer Kupplungsanordnung beziehen, die zwei derartige Reibkupplungen aufweist, die unabhängig voneinander ansteuerbar sind.

Es ist generell auch bekannt, derartige Reibkupplungen automatisiert mittels hydraulischer Aktuatoranordnungen zu betätigen.

Bekannte Hydraulikkreise von hydraulischen Aktuatoranordnungen zur Betätigung von Reibkupplungen beinhalten generell eine Pumpe, die über einen Nebenantrieb eines Verbrennungsmotors oder über einen Elektromotor angetrieben wird. Dabei ist es bekannt, einen Leitungsdruck mittels eines Druckregelventils zu erzeugen. Aus dem Leitungsdruck wird dann ferner ein Betätigungsdruck abgeleitet, in der Regel mittels eines weiteren Druckregelventils. Derartige Druckregelventile werden als Proportional- oder Servoventile ausgeführt. Solche Ventile sind kostenaufwändig und haben den Nachteil, dass sie bei der Montage hohe Anforderungen hinsichtlich der Reinheit der Montageumgebung erfordern.

Aus dem Dokument WO 2006/002450 ist ein Hydrauliksystem für die Steuerung von zwei Kupplungen eines Getriebes bekannt, wobei jeder Kupplung ein Hydraulikzylinder zugeordnet ist, wobei Hydraulikfluid von einer steuerbaren Pumpeneinheit aus einem Reservoir bereitgestellt wird. Die Pumpeneinheit weist eine bidirektional antreibbare Pumpe auf, deren einer Anschluss mit dem einen Hydraulikzylinder verbunden ist und deren anderer Anschluss mit dem anderen Hydraulikzylinder verbunden ist. Zur Einstellung des Drucks ist ein proportionales Druckregelventil vorgesehen. Über eine Druckwaage ist das Druckregelventil entweder mit dem einen oder mit dem anderen Anschluss der Pumpe verbunden. Um ein schnelles Ablassen von Hydraulikfluid aus einer betätigten Kupplung zu ermöglichen, sind die Pumpenanschlüsse ferner mit Schnellablassventilen verbunden, die ebenfalls als Proportionalventile ausgebildet sind. Diese Schnellablassventile sind druckbetätigt, in Abhängigkeit von dem Druck in der jeweiligen Druckleitung. Das Druckregelventil hingegen wird von einer Steuereinrichtung angesteuert.

Die Schnellablassventile sind dabei so angesteuert, dass sie dann, wenn an dem einen Pumpenanschluss ein signifikanter Druck bereitgestellt wird, geschlossen werden.

Eine weitere Möglichkeit einer hydraulischen Aktuatoranordnung beinhaltet einen sog. Pumpenaktuator. Hierbei ist eine Pumpe mit einem Elektromotor verbunden. Ein Druckanschluss der Pumpe ist über eine Druckleitung direkt mit einem Hydraulikzylinder zum Betätigen der Reibkupplung verbunden. Unter einer direkten Verbindung wird vorliegend insbesondere verstanden, dass in dieser Verbindung kein Druckregelventil vorhanden ist.

Der Druck in der Druckleitung zwischen Pumpe und Hydraulikzylinder wird durch Regeln der Drehzahl des Elektromotors eingestellt.

Zum Verbessern der Regelbarkeit ist es dabei bekannt, den Druckanschluss der Pumpe über einen Hydraulikzweig mit einem Niederdruckbereich zu verbinden.

Ein derartiger Pumpenaktuator ist bspw. aus dem Dokument EP 1 236 918 B1 bekannt. Hier ist offenbart, dass eine bauartbedingte Leckage der Pumpe oder ein Soll-Leck vorteilhaft sein können, um einen Dauerbetrieb der Pumpenanordnung zumindest mit einem relativ kleinen Mindest-Fördervolumen vorzusehen, damit der Verschleiß der Pumpenanordnung reduziert und/oder einer Ansprechgeschwindigkeit der Pumpenanordnung erhöht wird.

Aus diesem Dokument ist es ferner bekannt, die Druckleitung zwischen einem Druckanschluss der Pumpe und einem Hydraulikzylinder über ein Abführventil mit einem Reservoir zu verbinden, um einen besonders schnellen Druckabbau zu ermöglichen. Die Abführventile sind hier als elektronisch ansteuerbare Wegeventile dargestellt.

Ferner sind an die Druckleitung Hydrospeicher angeschlossen, um Druck-/Volumen-Spitzen zu dämpfen.

Eine Kupplungsanordnung mit den Merkmalen des Oberbegriffs des Anspruchs 1 ist bekannt aus dem Dokument WO 2013/110526 A1.

Ferner sind aus den Dokumenten EP 2 532 914 A1 und US 2009/298648 A1 Kupplungsanordnungen bekannt, bei denen eine direkte Verbindung zwischen einem Druckanschluss einer Pumpe und einem Hydraulikzylinder über ein Ventil mit einem Niederdruckkreis verbunden ist, wobei das Ventil die Verbindung zu dem Niederdruckkreis definiert auf einen beliebigen Wert zwischen vollständig offen und vollständig geschlossen einstellen kann.

Vor diesem Hintergrund ist es eine Aufgabe der Erfindung, eine verbesserte Kupplungsanordnung, ein verbessertes Ansteuerverfahren für eine Kupplungsanordnung sowie einen Antriebsstrang für ein Kraftfahrzeug mit einer solchen Kupplungsanordnung anzugeben, wobei die Kupplungsanordnung insbesondere besser an Betriebszustände der Kupplungsanordnung und/oder des Antriebsstranges angepasst werden kann, in den die Kupplungsanordnung integriert ist.

Diese Aufgabe wird durch eine Kupplungsanordnung gemäß Anspruch 1 gelöst, wobei in dem Hydraulikzweig ein Ventil angeordnet ist, das logisch gesehen in Reihe mit der Blende angeordnet ist, wobei ein Volumenstrom durch den Hydraulikzweig generell auf einen Wert begrenzt ist, der durch die Blende festgelegt ist, und wobei das Ventil dazu ansteuerbar ist, den Durchfluss durch den Hydraulikzweig noch weiter zu begrenzen.

Ferner wird die obige Aufgabe gelöst durch einen Antriebsstrang gemäß Anspruch 6
für ein Kraftfahrzeug mit einer erfindungsgemäßen Kupplungsanordnung.

Schließlich wird die obige Aufgabe gelöst durch ein Verfahren zum Ansteuern einer erfindungsgemäßen Kupplungsanordnung gemäß Anspruch 7, mit den Schritten, wenigstens einen Betriebszustand der Kupplungsanordnung und/oder einen Betriebszustand des Antriebsstranges zu erfassen, in den die Kupplungsanordnung integriert ist, und das Ventil anzusteuern, um den Durchfluss durch den Hydraulikzweig in Abhängigkeit von dem erfassten Betriebszustand noch weiter zu begrenzen.

Das Ventil ist vorzugsweise von einer Steuereinrichtung ansteuerbar. Die Steuereinrichtung kann Betriebszustände der Kupplungsanordnung und/oder anderer Komponenten des Antriebsstranges erfassen, um auf dieser Grundlage das Ventil anzusteuern. Das Ventil ist - logisch gesehen - in Reihe geschaltet mit der den Durchfluss begrenzenden Einrichtung. Dies impliziert, dass der Volumenstrom durch den Hydraulikzweig generell auf einen Wert begrenzt ist, der durch die den Durchfluss begrenzende Einrichtung festgelegt ist. Bei der den Durchfluss begrenzenden Einrichtung handelt es sich um eine Blende.

Das Ventil ist bei der erfindungsgemäßen - logisch gesehen - seriellen Anordnung mit einer solchen Einrichtung dazu ausgebildet, den begrenzten Volumenstrom bedarfsweise noch weiter zu begrenzen.

Durch diese Ausgestaltung kann der Leckagestrom, der generell für eine verbesserte Regelbarkeit sorgt, an Betriebszustände angepasst werden. Die Betriebszustände können eine Temperatur eines Hydraulikfluides, eine Boost-Phase des Antriebsstranges, eine Start-Stopp-Phase des Antriebsstranges, eine hohe Druckanforderung in der Druckleitung und/oder einen Notfall- oder Störzustand der Kupplungsanordnung und/oder des Antriebsstranges beinhalten.

Insbesondere ist es bevorzugt, wenn das Ventil betätigt wird, um den Durchfluss durch den Hydraulikzweig noch weiter zu begrenzen, wenn die Temperatur des Hydraulikfluides einen Schwellenwert überschreitet. Denn bei sehr warmen Hydraulikfluiden kann hierdurch erreicht werden, dass trotz des warmen Hydraulikfluids erforderliche hohe Kupplungsdrücke immer realisiert werden können. Ferner kann der Pumpenantrieb kompakter dimensioniert werden.

Schließlich kann die erfindungsgemäße Kupplungsanordnung auch dazu verwendet werden, um den Energieverbrauch der Kupplungsanordnung zu verringern. Durch den im Stand der Technik unveränderlichen ständigen Abfluss über den Hydraulikzweig wird es notwendig, die Pumpe auch im stationären Betrieb, bspw. in einem Start-Stopp-Zustand oder Ähnliches ständig anzutreiben, um den jeweiligen Druck zu halten. Durch Ansteuern des Ventils derart, dass der Durchfluss noch weiter begrenzt wird, kann der Wirkungsgrad der Kupplungsanordnung folglich verbessert werden.

Das Ventil kann insbesondere dazu ansteuerbar sein, den Durchfluss durch den Hydraulikzweig vollständig zu sperren. Hierdurch kann bei bestimmten Betriebszuständen der Energieverbrauch der Kupplungsanordnung signifikant reduziert werden.

Über eine Ansteuerung des Ventils ist es generell auch möglich, ein verändertes Druckansprechverhalten (Druckaufbau und -abbau) aufgrund schwankender Hydraulikfluidtemperatur zu kompensieren.

Die hydraulische Aktuatoranordnung weist in der Druckleitung vorzugsweise kein Druckregelventil auf, insbesondere kein proportionales Druckregelventil.

Hierdurch ist es auch möglich, die Kupplungsanordnung bei geringen Anforderungen an die Reinheit während der Montage zu fertigen.

Die Aufgabe wird somit vollkommen gelöst.

Von besonderem Vorzug ist es, wenn das Ventil in dem Hydraulikzweig als Wegeventil ausgebildet ist, das eine Schaltposition aufweist, in der der Hydraulikzweig gesperrt ist.

Das Wegeventil ist dabei vorzugsweise als herkömmliches Wegeventil ausgebildet, das gerade nicht als Proportional- oder Servoventil ausgebildet ist. Hierdurch kann das Ventil bei vergleichsweise geringen Anforderungen an die Reinheit während der Montage in die Kupplungsanordnung integriert werden.

Das Wegeventil ist vorzugsweise seriell mit der den Durchfluss begrenzenden Einrichtung in dem Hydraulikzweig verbunden. Das Wegeventil kann in eine Schaltposition vorgespannt sein, bei der das Wegeventil vollständig geöffnet ist, so dass der Durchfluss durch den Hydraulikzweig alleine durch die den Durchfluss begrenzende Einrichtung begrenzt wird. Das Wegeventil kann über eine Steuereinrichtung elektrisch ansteuerbar sein (bspw. mittels eines Magnetaktuators), um das Wegeventil in die Schaltposition zu versetzen, in der der Hydraulikzweig gesperrt ist.

Erfindungsgemäß ist die den den Durchfluss begrenzende Einrichtung eine Blende.

Hierdurch kann die den Durchfluss begrenzende Einrichtung kostengünstig realisiert werden.

Die Blende kann dabei als separates Bauteil ausgebildet sein, das seriell vor oder hinter dem Ventil in dem Hydraulikzweig angeordnet ist.

Die Kupplungsanordnung kann für einen Antriebsstrang vorgesehen sein, bei dem zwischen einem Antriebsmotor und einem Stufengetriebe nur die einzelne Reibkupplung vorgesehen ist.

Gemäß einer weiteren bevorzugten Ausführungsform beinhaltet die Kupplungsanordnung eine weitere Reibkupplung, wobei die hydraulische Aktuatoranordnung auch zum Betätigen der weiteren Reibkupplung ausgelegt ist, wobei die Aktuatoranordnung einen weiteren Hydraulikzylinder, eine weitere Pumpe sowie einen weiteren Elektromotor aufweist, wobei der weitere Elektromotor die weitere Pumpe antreibt, wobei ein Druckanschluss der weiteren Pumpe über eine weitere Druckleitung direkt mit dem weiteren Hydraulikzylinder verbunden ist, wobei der Druckanschluss der weiteren Pumpe über einen weiteren Hydraulikzweig mit dem Niederdruckbereich verbunden ist und wobei in dem weiteren Hydraulikzweig eine weitere den Durchfluss begrenzende Einrichtung angeordnet ist.

Eine derartige Kupplungsanordnung eignet sich insbesondere für Antriebsstränge mit Doppelkupplungsgetriebe.

Durch das Bereitstellen von separaten Pumpen und Elektromotoren ist es möglich, die zwei Reibkupplungen vollkommen unabhängig voneinander anzusteuern, so dass sich insbesondere gegenüber dem eingangs erwähnten Stand der Technik eine erhöhte Flexibilität bei der Ansteuerung ergibt.

Hierbei versteht sich, dass in dem weiteren Hydraulikzweig ein weiteres Ventil angeordnet sein kann, das dazu ansteuerbar ist, den Durchfluss durch den weiteren Hydraulikzweig noch weiter zu begrenzen.

In einer bevorzugten Ausführungsform ist dabei dem Hydraulikzweig und dem weiteren Hydraulikzweig ein einzelnes Ventil zugeordnet, das dazu ansteuerbar ist, entweder den Durchfluss durch den Hydraulikzweig oder den Durchfluss durch den weiteren Hydraulikzweig noch weiter zu begrenzen.

Ein derartiges Ventil, das beiden Hydraulikzweigen zugeordnet ist, kann ebenfalls als Wegeventil ausgebildet sein, kann jedoch auch als Servo- oder Proportionalventil ausgebildet sein.

Ferner ist es insgesamt vorteilhaft, wenn das Ventil von einer Steuereinrichtung ansteuerbar ist, die dazu ausgebildet ist, das Ventil bedarfsweise in Abhängigkeit von wenigstens einem Betriebszustand dazu anzusteuern, den Durchfluss durch den Hydraulikzweig noch weiter zu begrenzen.

Die bedarfsweise Ansteuerung kann im einfachsten Fall dazu eingerichtet sein, das Ventil in dem jeweiligen Hydraulikzweig dazu ansteuern, den Durchfluss noch weiter zu begrenzen, wenn die Temperatur des Hydraulikfluides einen Schwellenwert überschreitet, wenn das Hydraulikfluid also relativ warm ist.

Generell ist es auch denkbar, die den Durchfluss begrenzende Einrichtung (z.B. Blende) aufgrund der Möglichkeit der weiteren Begrenzung des Durchflusses größer auszulegen, so dass bei nicht angesteuertem Ventil ein relativ großer Durchfluss durch den weiteren Hydraulikzweig ermöglicht wird. Hierdurch kann die Regelbarkeit ggf. noch verbessert werden. Ferner kann auch ggf. ein schnellerer Druckabbau ermöglicht werden, wobei es vorzugsweise in diesem Fall nicht notwendig ist, für einen schnellen Druckabbau separate Abführventile vorzusehen.

Das Ventil wird bei niedrigen Temperaturen des Hydraulikfluides vorzugsweise nicht angesteuert, so dass der Durchfluss durch den Hydraulikzweig allein durch die den Durchfluss begrenzende Einrichtung begrenzt ist.

Während sog. Boost-Phasen kann das Ventil angesteuert werden, um ein schnelles Füllen der Kupplung zu ermöglichen. Am Ende der Boost-Phase kann das Ventil hingegen wieder geöffnet werden, um Druckspitzen zu dämpfen.

Das Ventil kann dazu angesteuert werden, den Durchfluss weiter zu begrenzen, wenn eine Start-Stopp-Phase in dem Antriebsstrang eingerichtet ist, wodurch der Wirkungsgrad verbessert werden kann. Ein Entleeren einer Kupplungssteuerschaltung kann hierdurch vorzugsweise verhindert werden. Ferner können vorzugsweise NVH-Probleme während einer Phase, bei der der Verbrennungsmotor angehalten ist, vermieden werden, da die Pumpe vorzugsweise während dieser Phase nicht in Drehung versetzt werden muss. Schließlich kann für diesen Fall auch elektrische Leistung eingespart werden.

Bei hohen Druckanforderungen kann das Ventil ebenfalls angesteuert werden, um eine hohe Druckverfügbarkeit zu ermöglichen.

Schließlich kann das Ventil gezielt geöffnet werden, wenn ein Notfall- oder Störzustand auftritt, um die Kupplung so schnell wie möglich zu öffnen, ohne Einschränkungen aufgrund eines niedrigen Druckes oder aufgrund einer niedrigen Temperatur.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Antriebsstranges für ein Kraftfahrzeug mit einer Ausführungsform einer erfindungsgemäßen Kupplungsanordnung;
- Fig. 2: eine nicht zur Erfindung gehörende Ausführungsform eines Ventils für die Kupplungsanordnung der Fig. 1;
- Fig. 3: eine nicht zur Erfindung gehörende Ausführungsform eines Ventils für die Kupplungsanordnung der Fig. 1;
- Fig.4: eine weitere schematische Darstellung einer Ausführungsform einer erfindungsgemäßen Kupplungsanordnung mit zwei Reibkupplungen und einem gemeinsamen Ventil für zwei Hydraulikzweige; und
- Fig. 5: eine schematische Darstellung einer Ausführungsform eines derartigen gemeinsamen Ventils für die Kupplungsanordnung der Fig. 4

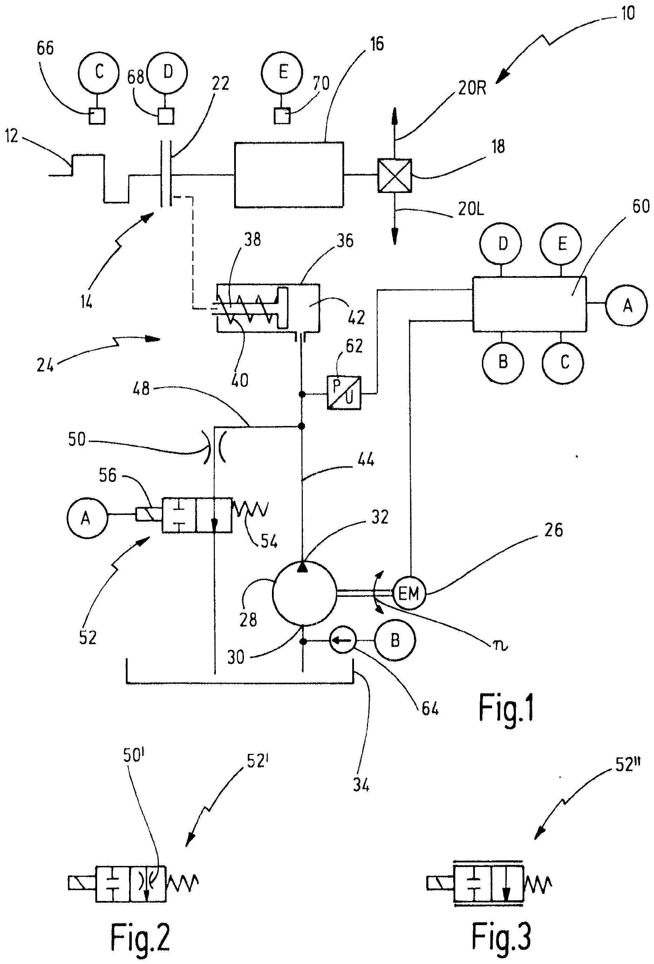

In Fig. 1 ist in schematischer Form ein Antriebsstrang für ein Kraftfahrzeug dargestellt und generell mit 10 bezeichnet. Der Antriebsstrang 10 weist einen Antriebsmotor 12 auf, der einen Verbrennungsmotor beinhalten kann oder eine Hydbrid-Antriebseinheit. Ferner weist der Antriebsstrang 10 eine Kupplungsanordnung 14 auf, die eingangsseitig mit dem Antriebsmotor 12 verbunden ist. Ausgangsseitig ist die Kupplungsanordnung 14 mit einem Stufengetriebe 16 verbunden, das bspw. in Vorgelegebauweise ausgebildet sein kann.

Das Stufengetriebe 16 und die Kupplungsanordnung 14 können auch durch ein Wandler-Automatikgetriebe gebildet sein.

Ein Ausgang des Stufengetriebe 16 ist mit einem Differential 18 verbunden, mittels dessen Antriebsleistung auf zwei angetriebene Räder 20L, 20R verteilt wird.

Die Kupplungsanordnung 14 beinhaltet eine Reibkupplung 22, bei der es sich um Trockenkupplung oder um eine nasslaufende Reibkupplung, bspw. in Form einer Lamellenkupplung handeln kann.

Ferner weist die Kupplungsanordnung 14 eine hydraulische Aktuatoranordnung 24 auf. Die hydraulische Aktuatoranordnung 24 weist einen Elektromotor 26 auf, der eine Pumpe 28 antreibt. Die Pumpe 28 weist einen Sauganschluss 30 und einen Druckanschluss 32 auf. Der Sauganschluss 30 ist mit einem Niederdruckbereich in Form eines Tanks 34 verbunden. Die Pumpe 28 ist als unidirektionale Pumpe dargestellt, kann jedoch auch eine bidirektionale Pumpe sein. Der Elektromotor 26 treibt die Pumpe 28 mit einer Drehzahl n an.

Die Aktuatoranordnung 24 beinhaltet ferner einen Hydraulikzylinder 36, der vorliegend als einfach wirkender Zylinder ausgebildet ist. Der Hydraulikzylinder 36 beinhaltet einen Kolben 38, der mit der Reibkupplung 22 gekoppelt ist. Ferner beinhaltet der Hydraulikzylinder 36 eine Kolbenfeder 40, mittels der der Kolben 38 in eine Position vorgespannt ist, bei der die Reibkupplung 22 eine Grundposition einnimmt. In der Regel ist die Grundposition eine offene Position der Reibkupplung 22 kann jedoch auch eine geschlossene Position sein.

Ein Zylinderraum 42 des Hydraulikzylinders 36 ist über eine Druckleitung 44 mit dem Druckanschluss 32 der Pumpe 28 verbunden. Die Verbindung zwischen dem Druckanschluss 32 der Pumpe 28 und dem Zylinderraum 42 ist eine direkte Verbindung, was vorliegend heißen soll, dass an die Druckleitung 44 kein Druckregelventil oder dergleichen angeschlossen ist. Der Druck eines Hydraulikfluids in der Druckleitung 44 wird vielmehr durch Regeln der Drehzahl n des Elektromotors 26 eingestellt.

An die Druckleitung 44 ist ein Hydraulikzweig 48 angeschlossen. Der Hydraulikzweig 48 beinhaltet eine Blende 50 und ein Ventil 52, das in Reihe mit der Blende 50 geschaltet ist. Der Hydraulikzweig 48 ist mit dem Niederdruckbereich 34 verbunden.

Das Ventil 52 ist vorliegend als 2/2-Wegeventil ausgebildet und weist eine Ventilfeder 54 auf, mittels der das Ventil 52 in eine Offenposition vorgespannt ist, bei der der Durchgang durch das Ventil 52 geöffnet ist, wie es in Fig. 1 dargestellt ist.

Das Ventil 52 weist ferner ein elektrisches Betätigungselement 56, bspw. in Form eines Magnetaktuators, auf, mittels dessen das Ventil 52 in eine Schließposition versetzt werden kann, bei der der Hydraulikzweig 48 gesperrt ist.

Das Betätigungselement 56 ist mit einer Steuereinrichtung 60 verbunden (Verbindung A). An die Druckleitung 44 ist ein Drucksensor 62 angeschlossen, der ebenfalls mit der Steuereinrichtung 60 verbunden ist.

Ferner weist die Aktuatoranordnung 24 einen Temperatursensor 64 auf, der die Temperatur des Hydraulikfluides misst. Vorliegend ist der Temperatursensor 64 im Bereich des Niederdruckbereiches 34 angeschlossen, kann jedoch auch an einer anderen Stelle angeschlossen sein. Der Temperatursensor 64 erfasst die Temperatur des Hydraulikfluides und ist mit der Steuereinrichtung 60 verbunden (Anschluss B).

Ferner beinhaltet der Antriebsstrang 10 eine Reihe von Sensoren, die den Betriebszustand der Kupplungsanordnung 14 und/oder von anderen Komponenten des Antriebsstranges erfassen können. Beispielhaft sind vorliegend ein Motorsensor 66 gezeigt, der mit der Steuereinrichtung 60 verbunden ist (Anschluss C), ein Kupplungssensor 68, der mit der Steuereinrichtung 60 verbunden ist (Anschluss D), und ein Getriebesensor 70, der mit der Steuereinrichtung 60 verbunden ist (Anschluss E).

Die Steuereinrichtung 60 erfasst wenigstens einen der Betriebszustände und steuert das Ventil 52 auf der Grundlage des Betriebszustandes, um den Durchfluss durch den Hydraulikzweig in Abhängigkeit von dem erfassten Betriebszustand noch weiter zu begrenzen, insbesondere den Hydraulikzweig 48 zu sperren.

Die generelle Funktionsweise der Kupplungsanordnung 14 ist Folgende. Ausgehend von einem Grundzustand (beispielhaft angenommen ein normalerweise geöffneter Zustand, "normally open") wird ein übergeordneter Steuerbefehl zum Schließen der Reibkupplung 22 von der Steuereinrichtung 60 erfasst. Die Steuereinrichtung 60 steuert daraufhin den Elektromotor 26 an, um die Pumpe 28 anzutreiben. Hierdurch wird Hydraulikfluid in die Druckleitung 44 gefördert, wo sich ein Druck P aufbaut, der mittels des Drucksensors 62 erfasst wird. Durch Regeln der Drehzahl n des Elektromotors 26 lässt sich der Druck P feinfühlig einstellen. Hierbei unterstützt der Hydraulikzweig 48, indem eine gezielte Leckage von der Druckleitung 44 hin zu dem Niederdruckbereich 34 eingerichtet wird (das Ventil 52 ist dabei in der Regel nicht angesteuert, so dass es den Durchfluss nicht begrenzt). Hierdurch kann die Regelbarkeit des Druckes P verbessert werden, insbesondere hinsichtlich des Ansprechverhaltens.

Sofern ein bestimmter Betriebszustand erfasst wird, bspw. eine erhöhte Temperatur des Hydraulikfluides, wird das Ventil 52 von der Steuereinrichtung 60 dazu angesteuert, die zweite Schaltposition (Schließposition) einzunehmen, bei der der Durchfluss durch den Hydraulikzweig 48 gesperrt ist. Hierdurch kann in bestimmten Betriebszuständen ein schnellerer Druckaufbau erreicht werden bzw. ein geringerer Energieverbrauch bzw. die Erfüllung hoher Druckanforderungen.

In einem Notfall- oder Störzustand kann das Ventil 52 von der Steuereinrichtung 60 dazu angesteuert werden, die erste Schaltposition (Offenposition) einzunehmen, bei der der Durchfluss durch das Ventil 52 nicht behindert ist. Hierdurch kann der Druck in der Druckleitung 44 bei abgeschalteter Pumpe 28 schnell abgebaut werden, und auch das in dem Zylinderraum 42 enthaltene Fluid kann vergleichsweise schnell über die Blende 50 entleert werden. Durch Umkehren der Drehrichtung der Pumpe 28 lässt sich dieser Vorgang noch weiter beschleunigen.

In den Figuren 2 und 3 sind alternative Ausführungsformen von Ventilen gezeigt, die anstelle des Ventils 52 in Fig. 1 verwendet werden können.

Das in Fig. 2 gezeigte Ventil 52', welches eine nicht zur Erfindung gehörende Ausgestaltungsform betrifft, ist identisch aufgebaut wie das Ventil 52 der Fig. 1, mit der Ausnahme, dass die Blende in das Ventil 52' integriert ist, wie es in Fig. 2 bei 50' dargestellt ist.

Fig. 3 zeigt ein Ventil 52" in der Form eines Proportional- oder Servoventils. Bei dieser Variante kann der Durchfluss durch das Ventil 52' auf jeden beliebigen Wert zwischen einem Sperren des Hydraulikzweiges 48 und einem vollständigen Öffnen des Hydraulikzweiges 48 eingestellt werden.

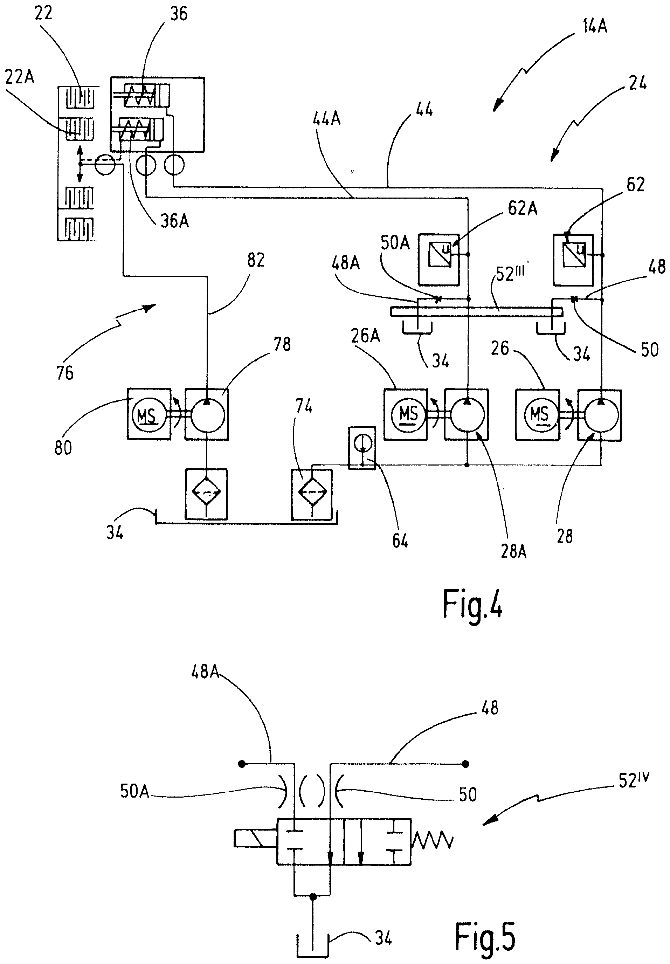

In Fig. 4 ist eine weitere Ausführungsform einer Kupplungsanordnung 14A dargestellt, die hinsichtlich Aufbau und Funktionsweise generell der Kupplungsanordnung 14 der Fig. 1 entspricht. Gleiche Elemente sind daher durch gleiche Bezugszeichen gekennzeichnet. Im Folgenden werden im Wesentlichen die Unterschiede erläutert.

Die Kupplungsanordnung 14A weist neben der Reibkupplung 22 eine weitere Reibkupplung 22A auf, wodurch sich die Kupplungsanordnung 14A zur Verwendung einem Doppelkupplungsgetriebe eines Kraftfahrzeugantriebsstranges eignet. Demzufolge beinhaltet die hydraulische Aktuatoranordnung 24 einen weiteren Elektromotor 26A, eine weitere Pumpe 28A und einen weiteren Hydraulikzylinder 36A. Der weitere Hydraulikzylinder 36A ist über eine weitere Druckleitung 44A mit einem nicht näher bezeichneten Druckanschluss der weiteren Pumpe 28A verbunden. Die weitere Druckleitung 44A ist über einen weiteren Hydraulikzweig 48A mit dem Niederdruckbereich 34 verbunden. In dem weiteren Hydraulikzweig 48A ist eine weitere Blende 50A vorgesehen.

Ferner beinhaltet die Aktuatoranordnung 24 einen Fluidfilter 74, der zwischen den Niederdruckbereich 34 und Sauganschlüsse der Pumpen 28, 28A geschaltet ist. Hier ist auch der Temperatursensor 64 angeschlossen.

Zudem beinhaltet die Kupplungsanordnung 14A einen Kühlkreis 76 für die Reibkupplungen 22, 22A. Der Kühlkreis 76 beinhaltet eine Kühlpumpe 78, die mittels eines Kühlpumpenmotors 80 in Form eines Elektromotors angetrieben ist, wobei ein Druckanschluss der Kühlpumpe 78 über eine Kühlleitung 82 mit einem Kühlabschnitt der Reibkupplungen 22, 22A verbunden ist.

Die zwei Reibkupplungen 22 bis 22A lassen sich über die zwei parallelen Zweige mit den parallelen Pumpen 28, 28A und den parallelen Druckleitungen 44, 44A unabhängig voneinander ansteuern.

Generell kann in jedem der Hydraulikzweige 48, 48A eines der Ventile 52, 52', 52" der Figuren 1 bis 3 eingesetzt werden.

Vorliegend ist dargestellt, dass eine solche Anordnung aus zwei Ventilen durch ein einzelnes Ventil 52'" ersetzt werden kann, das von der Steuereinrichtung 60 dazu angesteuert wird, entweder den Durchfluss durch den Hydraulikzweig 48 oder den Durchfluss durch den weiteren Hydraulikzweig 48A weiter zu begrenzen.

Fig. 5 zeigt eine beispielhafte Ausführungsform eines derartigen Ventils 52^{IV}. Das Ventil 52^{IV} ist als 4/4-Wegeventil ausgebildet, das die Funktion von zwei Wegeventilen 52 der Fig. 1 quasi verdoppelt. Da die Funktionalität des Ventils 52^{IV} jeweils nur für den aktiven Zweig notwendig ist, kann ein derartiges einzelnes Ventil für beide Hydraulikzweige 48, 48A realisiert werden.

## Patentansprüche

1. Kupplungsanordnung (14) für einen Kraftfahrzeugantriebsstrang (10), mit einer Reibkupplung (22) und einer hydraulischen Aktuatoranordnung (24) zum Betätigen der Reibkupplung (22), wobei die Aktuatoranordnung (24) einen Hydraulikzylinder (36), eine Pumpe (28) sowie einen Elektromotor (26) aufweist, wobei der Elektromotor (26) die Pumpe (28) antreibt, wobei ein Druckanschluss (32) der Pumpe (28) über eine Druckleitung (44) direkt mit dem Hydraulikzylinder (36) verbunden ist, wobei der von der Pumpe (28) in der Druckleitung (44) bereitgestellte Druck (P) durch Regeln der Drehzahl (n) des Elektromotors (26) einstellbar ist, wobei der Druckanschluss (32) über einen Hydraulikzweig (48) mit einem Niederdruckbereich (34) verbunden ist und wobei in dem Hydraulikzweig (48) eine den Durchfluss begrenzende Blende (50) angeordnet ist,
**dadurch gekennzeichnet, dass**
in dem Hydraulikzweig (48) ein Ventil (52) angeordnet ist, das logisch gesehen in Reihe mit der Blende (50) angeordnet ist, wobei ein Volumenstrom durch den Hydraulikzweig (48) generell auf einen Wert begrenzt ist, der durch die Blende (50) festgelegt ist, und wobei das Ventil (52) dazu ansteuerbar ist, den Durchfluss durch den Hydraulikzweig (48) noch weiter zu begrenzen.

2. Kupplungsanordnung nach Anspruch 1, **dadurch gekennzeichnet, dass** das Ventil (52; 52^{I}; 52^{IV}) als Wegeventil ausgebildet ist, das eine Schaltposition aufweist, in der der Hydraulikzweig (48) gesperrt ist.

3. Kupplungsanordnung nach einem der Ansprüche 1 - 2, **gekennzeichnet durch** eine weitere Reibkupplung (22A), wobei die hydraulische Aktuatoranordnung (24) auch zum Betätigen der weiteren Reibkupplung (22A) ausgelegt ist, wobei die Aktuatoranordnung (24) einen weiteren Hydraulikzylinder (36A), eine weitere Pumpe (28A) sowie einen weiteren Elektromotor (26A) aufweist, wobei der weitere Elektromotor (26A) die weitere Pumpe (28A) antreibt, wobei ein Druckanschluss der weiteren Pumpe (28A) über eine weitere Druckleitung (44A) direkt mit dem weiteren Hydraulikzylinder (36A) verbunden ist, wobei der Druckanschluss der weiteren Pumpe (28A) über einen weiteren Hydraulikzweig (48A) mit dem Niederdruckbereich (34) verbunden ist und wobei in dem weiteren Hydraulikzweig (48A) eine weitere den Durchfluss begrenzende Einrichtung (50A) angeordnet ist.

4. Kupplungsanordnung nach Anspruch 3, **dadurch gekennzeichnet, dass** dem Hydraulikzweig (48) und dem weiteren Hydraulikzweig (48A) ein einzelnes Ventil (52^{III}, 52^{IV}) zugeordnet ist, das dazu ansteuerbar ist, entweder den Durchfluss durch den Hydraulikzweig (48) oder den Durchfluss durch den weiteren Hydraulikzweig (48A) noch weiter zu begrenzen.

5. Kupplungsanordnung nach einem der Ansprüche 1 - 4, **dadurch gekennzeichnet, dass** das Ventil (52) von einer Steuereinrichtung (60) ansteuerbar ist, die dazu ausgebildet ist, das Ventil (52) bedarfsweise in Abhängigkeit von wenigstens einem Betriebszustand dazu anzusteuern, den Durchfluss noch weiter zu begrenzen.

6. Antriebsstrang (10) für ein Kraftfahrzeug mit einer Kupplungsanordnung (14) nach einem der Ansprüche 1 - 5.

7. Verfahren zum Ansteuern einer Kupplungsanordnung (14) nach einem der Ansprüche 1 - 5 mit den Schritten:
- Erfassen wenigstens eines Betriebszustandes der Kupplungsanordnung (14) und/oder eines Betriebszustandes eines Antriebstranges (10), in den die Kupplungsanordnung (14) integriert ist; und
- Ansteuern des Ventils (52), um den Durchfluss durch den Hydraulikzweig (48) in Abhängigkeit von dem erfassten Betriebszustand noch weiter zu begrenzen.

8. Verfahren nach Anspruch 7, wobei der Betriebszustand eine Temperatur eines Hydraulikfluides, eine Boost-Phase des Antriebsstranges (10), eine Start-Stopp-Phase des Antriebsstranges (10), eine hohe Druckanforderung in der Druckleitung (44) und/oder einen Notfall- oder Störzustand der Kupplungsanordnung (14) und/oder des Antriebsstranges (10) beinhaltet.

## Claims

1. Clutch arrangement (14) for a motor vehicle drive train (10), having a friction clutch (22) and a hydraulic actuator arrangement (24) for actuating the friction clutch (22), the actuator arrangement (24) having a hydraulic cylinder (36), a pump (28) and an electric motor (26), the electric motor (26) driving the pump (28), a pressure connector (32) of the pump (28) being connected directly to the hydraulic cylinder (36) via a pressure line (44), it being possible for the pressure (P) which is provided by the pump (28) in the pressure line (44) to be set by way of regulation of the rotational speed (n) of the electric motor (26), the pressure connector (32) being connected to a low pressure region (34) via a hydraulic branch (48), and an orifice (50) which limits the throughflow being arranged in the hydraulic branch (48),
**characterized in that**
a valve (52) is arranged in the hydraulic branch (48), which valve (52) is arranged in series with the orifice (50) in logic terms, a volumetric flow through the hydraulic branch (48) being limited generally to a value which is fixed by way of the orifice (50), and it being possible for the valve (52) to be actuated so as to limit the throughflow through the hydraulic branch (48) even further.

2. Clutch arrangement according to Claim 1, **characterized in that** the valve (52; 52^{I}; 52^{IV}) is configured as a directional valve which has a switching position, in which the hydraulic branch (48) is shut off.

3. Clutch arrangement according to either of Claims 1 and 2, **characterized by** a further friction clutch (22A), the hydraulic actuator arrangement (24) also being designed to actuate the further friction clutch (22A), the actuator arrangement (24) having a further hydraulic cylinder (36A), a further pump (28A) and a further electric motor (26A), the further electric motor (26A) driving the further pump (28A), a pressure connector of the further pump (28A) being connected directly to the further hydraulic cylinder (36A) via a further pressure line (44A), the pressure connector of the further pump (28A) being connected to the low pressure region (34) via a further hydraulic branch (48A), and a further device (50A) which limits the throughflow being arranged in the further hydraulic branch (48A).

4. Clutch arrangement according to Claim 3, **characterized in that** the hydraulic branch (48) and the further hydraulic branch (48A) are assigned a single valve (52^{III}, 52^{IV}) which can be actuated so as to even further limit either the throughflow through the hydraulic branch (48) or the throughflow through the further hydraulic branch (48A).

5. Clutch arrangement according to one of Claims 1 to 4, **characterized in that** the valve (52) can be actuated by a control device (60) which is configured to actuate the valve (52) if required in a manner which is dependent on at least one operating state so as to limit the throughflow even further.

6. Drive train (10) for a motor vehicle having a clutch arrangement (14) according to one of Claims 1 to 5.

7. Method for actuating a clutch arrangement (14) according to one of Claims 1 to 5, having the steps:
detecting at least one operating state of the clutch arrangement (14) and/or one operating state of a drive train (10), into which the clutch arrangement (14) is integrated, and
- actuating the valve (52), in order to limit the throughflow through the hydraulic branch (48) even further in a manner which is dependent on the detected operating state.

8. Method according to Claim 7, the operating state comprising a temperature of a hydraulic fluid, a boost phase of the drive train (10), a start/stop phase of the drive train (10), a high pressure requirement in the pressure line (44) and/or an emergency or fault state of the clutch arrangement (14) and/or the drive train (10).

## Revendications

1. Système d'embrayage (14) pour une chaîne cinématique de véhicule automobile (10), avec un embrayage à friction (22) et un système d'actionneur hydraulique (24) pour actionner l'embrayage à friction (22), dans lequel le système d'actionneur (24) présente un cylindre hydraulique (36), une pompe (28) ainsi qu'un moteur électrique (26), dans lequel le moteur électrique (26) entraîne la pompe (28), dans lequel un raccord de pression (32) de la pompe (28) est raccordé directement au cylindre hydraulique (36) par une conduite sous pression (44), dans lequel la pression (P) fournie dans la conduite sous pression (44) par la pompe (28) est réglable par réglage du nombre de tours (n) du moteur électrique (26), dans lequel le raccord de pression (32) est raccordé par une branche hydraulique (48) à une zone basse pression (34) et dans lequel un diaphragme (50) limitant le débit est disposé dans la branche hydraulique (48),
**caractérisé en ce qu'**une vanne (52) est disposée dans la branche hydraulique (48), qui considérée de façon logique est montée en série avec le diaphragme (50), dans lequel un flux volumétrique à travers la branche hydraulique (48) est limité d'une manière générale à une valeur qui est fixée par le diaphragme (50), et dans lequel la vanne (52) peut être commandée de façon à limiter encore davantage le flux volumétrique à travers la branche hydraulique (48).

2. Système d'embrayage selon la revendication 1, **caractérisé en ce que** la vanne (52; 52^{I}; 52^{IV}) est réalisée comme une vanne de distribution, qui présente une position de commutation, dans laquelle la branche hydraulique (48) est fermée.

3. Système d'embrayage selon une des revendications 1 à 2, **caractérisé par** un autre embrayage à friction (22A), dans lequel le système d'actionneur hydraulique (24) est également conçu pour actionner l'autre embrayage à friction (22A), dans lequel le système d'actionneur (24) présente un autre cylindre hydraulique (36A), une autre pompe (28A) ainsi qu'un autre moteur électrique (26A), dans lequel l'autre moteur électrique (26A) entraîne l'autre pompe (28A), dans lequel le raccord de pression de l'autre pompe (28A) est raccordé directement par une autre conduite sous pression (44A) à l'autre cylindre hydraulique (36A), dans lequel le raccord de pression de l'autre pompe (28A) est raccordé à la zone basse pression (34) par une autre branche hydraulique (48A) et dans lequel un autre dispositif (50A) limitant le débit est disposé dans l'autre branche hydraulique (48A).

4. Système d'embrayage selon la revendication 3, **caractérisé en ce qu'**une vanne individuelle (52^{III}, 52^{IV}) est associée à la branche hydraulique (48) et à l'autre branche hydraulique (48A), laquelle peut être commandée pour limiter encore davantage soit le débit à travers la branche hydraulique (48) soit le débit à travers l'autre branche hydraulique (48A).

5. Système d'embrayage selon l'une quelconque des revendications 1 à 4, **caractérisé en ce que** la vanne (52) peut être commandée par un dispositif de commande (60), qui est configuré pour commander si nécessaire la vanne (52) en fonction d'au moins un état de fonctionnement en vue de limiter encore davantage le débit.

6. Chaîne cinématique (10) pour un véhicule automobile avec un système d'embrayage (14) selon l'une quelconque des revendications 1 à 5.

7. Procédé de commande d'un système d'embrayage (14) selon l'une quelconque des revendications 1 à 5, comprenant les étapes suivantes:
- détecter au moins un état de fonctionnement du système d'embrayage (14) et/ou un état de fonctionnement d'une chaîne cinématique (10), dans laquelle le système d'embrayage (14) est intégré; et
- commander la vanne (52), afin de limiter encore davantage le débit à travers la branche hydraulique (48) en fonction de l'état de fonctionnement détecté.

8. Procédé selon la revendication 7, dans lequel l'état de fonctionnement comprend une température d'un fluide hydraulique, une phase de poussée de la chaîne cinématique (10), une phase démarrage-arrêt de la chaîne cinématique (10), une forte demande de pression dans la conduite sous pression (44) et/ou une situation d'urgence ou de panne du système d'embrayage (14) et/ou de la chaîne cinématique (10).
